# EUROPÄISCHE PATENTSCHRIFT

(11) **EP 0 877 069 B1**
(45) Veröffentlichungstag und Bekanntmachung des Hinweises auf die Patenterteilung: **28.06.2000**
(21) Anmeldenummer: 98107488.3
(22) Anmeldetag: 24.04.1998
(51) Int. Cl.: C09J 7/00, C08L 101/06

(54) **Thermisch härtbare, haftklebrige Folie**
Heat curable adhesive foil
Film adhésive thermodurcissable

(30) Priorität: 09.05.1997 DE 19719647
(43) Veröffentlichungstag der Anmeldung: 11.11.1998
(73) Patentinhaber: Beiersdorf Aktiengesellschaft, 20245 Hamburg (DE)
(72) Erfinder: Schümann, Uwe, Dr., 25421 Pinneberg (DE); Weiland, Kirstin, 21035 Hamburg (DE)

(56) Entgegenhaltungen:
- EP-A- 0 356 715
- DATABASE WPI Section Ch, Week 8532 Derwent Publications Ltd., London, GB; Class A18, AN 85-194723 XP002073726 & JP 60 123 574 A (HAYAKAWA GUM KK)
- DATABASE WPI Section Ch, Week 7622 Derwent Publications Ltd., London, GB; Class A12, AN 76-40920X XP002073727 & JP 51 044 137 A (CI KK)

## Beschreibung

Die Erfindung beschreibt eine beidseitig haftklebrige Folie auf Basis von Kautschuk, die zum Erreichen hoher Klebfestigkeiten thermisch gehärtet werden kann.

Der Einsatz von Klebstoffen im Rohbau in der Automobilindustrie ist als Ergänzung zu den klassischen Befestigungsmethoden wie Nieten, Schrauben oder Schweißen seit Jahren Stand der Technik. Zum Einsatz kommen überwiegend flüssige oder pastöse einkomponentige Materialien, die durch Pumpen gefördert werden können und maschinell applizierbar sind.

Die charakteristischen Anforderungen an einen Rohbauklebstoff sind:
Es muß eine gute, alterungs- und hydrolysebeständige Haftung auf geölten Blechen unterschiedlicher Sorten, wie zum Beispiel auf normalem Stahl, feuerverzinktem Stahl, galvannealed Stahl oder elektrolytisch verzinktem Stahl gegeben sein, was sich in einem kohäsiven Bruchbild niederschlagen muß. Die Alterungs- und Hydrolysestabilität wird durch Lagerung bei erhöhten Temperaturen, Salzsprühtests, Schwitzwassertests, Klimawechseltests und ähnliches geprüft.
Ein Rohbauklebstoff darf in den verschiedenen Entfettungsbädem und -duschen, in den Phosphatier- und Passivierbädem sowie während der Elektrotauchlackierung nicht ausgewaschen werden.
Er muß darüber hinaus im KTL-Einbrennofen bei ca. 180 °C während 30 Minuten aushärten und überbrennstabil bis ca. 230 °C sein.

Obwohl diese Anforderungen von vielen flüssigen beziehungsweise pastösen Materialien erfüllt werden, sind diese nicht frei von Nachteilen.

So wird bei vielen dieser Klebstoffe die Forderung der Auswaschbeständigkeit nur auf eine der folgenden Weisen erreicht.
Entweder werden die flüssigen oder pastösen Materialien in einem den Waschbädern vorgeschalteten Ofen vorgeliert, oder die Materialien werden so hochviskos eingestellt, daß sie als Warmmelts oder Hotmelts verarbeitet werden müssen, d.h., sie müssen vor der Applikation auf eine Temperatur deutlich über Raumtemperatur erhitzt werden. Bei beiden Methoden fallen durch die Heizvorgänge Energiekosten an.

Neuerdings sind am Markt auch Klebstoffpasten verfügbar, die bei Raumtemperatur verarbeitbar und trotzdem in manchen Lackierstraßen ohne Vorgelierung wäscherfest sind, was durch eine ausgeprägt strukturviskose Einstellung erreicht wird. Aber auch diese Klebstoffe haben Nachteile, denn die zu verklebenden Blechteile müssen vor der thermischen Härtung des Klebstoffs mechanisch fixiert werden, um ein Verrutschen zu verhindern.

Generell haben alle flüssigen oder pastösen, reaktiven Klebstoffe den Nachteil, daß sie in den Förderleitungen und Förderpumpen langsam vorvernetzen und diese dadurch ganz allmählich verstopfen, was zu Pannen und Produktionsstillständen führen kann.

Haftklebstoffolien hingegen besitzen diese Nachteile nicht. Haftklebstoffolien, die zur Erzielung hoher Festigkeiten thermisch gehärtet werden können, sind ebenfalls schon vorbekannt.

In JP 50 028 970 wird ein aus Lösung hergestellter Blend aus Acrylaten und Epoxidharz beschrieben, der zunächst haftklebrig ist und nach der thermischen Härtung hohe Scherfestigkeiten erreicht.

In WO 95 13 328, US 5,086,088 und EP 0 386 909 werden ebenfalls thermisch härtbare Haftklebstoffe auf Basis von Acrylat/Epoxid-Blends beschrieben, wobei die Acrylate photochemisch vernetzt werden.

Auch in JP 04 189 887, JP 04 189 885 und JP 04 189 884 werden spezielle Acrylat/Epoxidharz-Blends eingesetzt, um zu thermisch härtbaren Haftklebstoffen zu gelangen.

Obwohl das Prinzip, die haftklebrigen Eigenschaften der Acrylate und die hohen Festigkeiten der thermisch gehärteten Epoxide in Form von Blends in einem System zu vereinen, zweifellos funktioniert, gibt es auch Nachteile.
Mit solchen Systemen ist es bisher nicht möglich gewesen, kohäsive Bruchbilder auf geölten Automobilrohbaublechen bei Klebfestigkeitswerten größer 10 N/mm² zu erzielen. Epoxidharze sind außerdem hautreizend, was bei der manuellen Applikation solcher Folien
unter Umständen besondere Schutzmaßen erforderlich macht.

Aus der deutschen Offenlegungsschrift DE 38 30 895 A ist der Aufbau eines Kautschuks aus mindestens zwei Ausgangspolymeren beschrieben, die über Estergruppen chemisch miteinander verknüpft sind und von denen zumindest eine olefinisch ungesättigt ist.

In EP 0 356 715 B1 wird schließlich ein Zweikomponenten-Klebstoff beschrieben, der ebenfalls von dem oben genannten Aufbau Gebrauch macht und in dem zusätzlich die Vulkanisation der Mischung bei höheren Temperaturen beschrieben wird. Auch die Verwendung als Automobilrohbau-Klebstoff ist dort aufgeführt. Jedoch wird dieses Material vor der Polyveresterung auf die zu verklebenden Substrate aufgebracht und kann somit auf den Substraten anfließen.

Aufgabe der Erfindung war es, eine beidseitig haftklebrige Folie zu schaffen, die zur Erzielung hoher Klebfestigkeiten thermisch gehärtet werden kann und die nach der thermischen Härtung insbesondere auf geölten Blechen, wie sie im Automobilrohbau eingesetzt werden, so gut haftet, daß bei Reißversuchen kohäsive Bruchbilder erzeugt werden. Weiterhin sollte die Folie frei von Epoxidharzen sein.

Gelöst wird diese Aufgabe durch eine Folie, wie sie im Hauptanspruch gekennzeichnet ist. Gegenstand der Unteransprüche sind dabei vorteilhafte Ausführungsformen der erfindungsgemäßen Folie.

Demgemäß setzt sich die beidseitig haftklebrige Folie aus folgenden Anteilen zusammen:
- 15 - 60 Gew.-%: aus einem thermisch vulkanisierbaren, polyveresterten Kautschuk,
- 10 - 30 Gew.-%: aus Bitumen und/oder klebrigmachenden Harzen,
- 1 - 20 Gew.-%: aus Vulkanisationshilfsmitteln,
- 0,2 - 5 Gew.-%: aus Vulkanisationsbeschleunigern,
- 10 - 70 Gew.-%: aus Füllstoffen und
gegebenenfalls weiteren Hilfsstoffen, Weichmachern und Ölen.

Das Bitumen beziehungsweise die klebrigmachenden Harze, beispielsweise ein Terpenphenolharz, dienen zur Einstellung der Haftklebrigkeit der Folie.

Der Kautschuk ist vorzugsweise das Reaktionsprodukt eines Polymeren oder eines Polymergemisches A mit im Mittel mindestens zwei Hydroxylgruppen pro Makromolekül und eines mit A verträglichen Polymeren oder Polymergemisches B mit im Mittel mindestens zwei Carbonsäuregruppen oder mindestens zwei Carbonsäureanhydridgruppen oder mindestens einer Carbonsäuregruppe sowie einer Carbonsäureanhydridgruppe pro Makromolekül, wobei mindestens eines der Polymeren A oder B olefinische Doppelbindungen enthält, über die der Kautschuk unter den üblichen Reaktionsbedingungen bei erhöhter Temperatur vulkanisierbar ist.

In einer besonders vorteilhaften Ausführungsform sind die Polymere A und B flüssige Polybutadiene, die im Mittel mindestens zwei Hydroxylgruppen, Carbonsäuregruppen oder Carbonsäureanhydridgruppen pro Makromolekül tragen.
Diese funktionellen Gruppen können endständig an den Kettenenden oder an den Enden der Seitenketten gebunden sein, sie können aber auch innenständig an der Kette liegen.

Schließlich kann der Kautschuk als weitere Ausgangsbestandteile kurzkettige Hydroxyl- oder Carbonsäureanhydrid- oder Carbonsäure-terminierte Stoffe aufweisen. Diese fungieren im Hinblick auf die Polyester-Bildung als Abbrecher (zum Beispiel Monoalkohole), Kettenverlängerer (zum Beispiel Glykole) oder Vemetzer (zum Beispiel Glyzerin).

Die Polyveresterung des Kautschuks erfolgt weiter vorzugsweise durch den Zusatz eines Veresterungskatalysators, und zwar zu einem Anteil von 0,05 Gew.-% bis 0,5 Gew.-%.

Als Veresterungskatalysatoren kommen dabei zum Einsatz insbesondere basische Veresterungskatalysatoren wie Amine, bevorzugt sekundäre und tertiäre aliphatische Amine, ganz besonders bevorzugt n-Dibutylamin, Dimethycyclohexylamin, Diazabicyclooctan, Tetramethylethylendiamin oder Pentamethyldiethylentriamin sowie 1-Methylimidazol oder 1,2-Dimethylimidazol.
Jedoch können, falls keine Metalle verklebt werden sollen, auch saure Veresterungskatalysatoren eingesetzt werden. Voraussetzung ist, daß dies mit dem Vulkanisations-system verträglich ist.

Als Vulkanisationshilfsmittel und Vulkanisationsbeschleuniger haben sich Schwefel, 2,2'-Dibenzothiazyldisulfid und gegebenenfalls Zinkoxid als besonders vorteilhaft erwiesen.
Der Zusatz der genannten Stoffe erfolgt in einer bei einer Vulkanisation üblichen Menge.

Je nach Anwendungsfall können der Folie schließlich weitere Füllstoffe wie Kreide, Ruß, Titandioxid, Talkum, pyrogene Kieselsäure, Bariumsulfat oder Calciumoxid zugesetzt sein, darüber hinaus als Hilfsstoffe Oxidationsinhibitoren, bevorzugt Pentaerythrityltetrakis-[3-(3,5-di-tert.butyl-4-hydroxiphenyl)-propionat].
Weiterhin kann die Folie auch noch mit dem System verträgliche Weichmacher oder als Weichmacher fungierende Öle enthalten. Bevorzugt in Frage kommen handelsübliche Phthalat-Weichmacher oder naphthenische Öle.

Die erfindungsgemäße Folie eignet sich hervorragend zur Verwendung im Automobilrohbau, insbesondere zur Verklebung von geölten Blechen. Aber auch andere Metallteile lassen sich sehr gut mit der Folie verkleben.

Die Folie zeigt aufgrund ihrer Formulierung gemäß obiger Beschreibung hervorragende Produkteigenschaften, die auch für den Fachmann derartig nicht vorherzusehen waren.

Es können Zugscherfestigkeiten von über 12 MPa erreicht werden.

Vor der thermischen Vernetzung hat die Folie sowohl auf ungeöltem als auch auf geöltem Stahl eine Klebkraft von ca. 1 N/cm bis 3 N/cm (jeweils bei einem Schälwinkel von 180°). Nach der thermischen Härtung (bei 180 °C und für 30 Minuten) wird auf ungeölten wie auf geölten Blechen eine Klebfestigkeit von bis zu 14 N/mm² erreicht.
Wesentlich niedrigere Klebfestigkeiten können auch eingestellt werden, zum Beispiel für Unterfütterungsklebungen. Die Steuerung der Klebfestigkeit erfolgt über die eingesetzte Schwefelmenge.

Durch die Wahl der Inhaltsstoffe zeigt die Folie eine gute Hydrolyse- und Alterungsstabilität.

Sie ist wesentlich hautfreundlicher als die ansonsten für hochfeste Verklebungen angebotenen Epoxidfolien, da sie keine als hautreizend eingestuften Stoffe in einer relevanten Konzentration enthält.

Die Bruchbilder der Folie sind in vielen Fällen kohäsiv.
Unter köhäsiven Bruch bildern sind dabei solche Brüche zu verstehen, bei denen auf beiden, auseinander gebrochenen Teilen Kleber verbleibt.

Dies ist insbesondere wiederum bei Automobilblechen von Bedeutung. Bei Versagen der Verklebung zweier Bleche ist gewährleistet, daß auf jedem Teilblech die Oberfläche weiterhin durch Kleber beziehungsweise die erfindungsgemäße Folie geschützt ist. Die Folie, die ein kohäsives Bruchbild aufweist, übernimmt somit gleichzeitig die Funktion des Korrosionsschutzes, eine Unterrostung des Bleches ist nicht möglich.
Darüber hinaus gibt ein köhäsives Bruchbild dem Fachmann einen Hinweis darauf, daß die Folie insbesondere auf Blechen eine sehr gute Haftung zeigt.

Insbesondere bei der vorgeschlagenen Verwendung der Folie im Automobilrohbau wird diese -bedingt durch die Polyester-Vorvernetzung- in den verschiedenen Entfettungsbädern und Entfettungsduschen, in den Phophatier- und Passivierbädern sowie während der Elektrotauchlackierung nicht ausgewaschen.
Im Gegensatz zu dem in EP 0 356 715 beschriebenen Zweikomponenten-Klebstoff liegt die Folie vor dem Aufbringen auf das Substrat bereits in einem vorvernetzten Zustand vor. Die Haftung zum Substrat wird schließlich erreicht, indem die Folie mit Bitumen beziehungsweise mit klebrigmachenden Harzen im Sinne eines druckempfindlichen Klebebandes haftklebrig eingestellt wird.

Zur Herstellung der Folie werden zunächst entweder einem der Polymere A oder B oder alternativ beiden Polymeren A und B getrennt voneinander die aufgeführten Inhaltsstoffe mit einem handelsüblichen Dissolver, Planetenmischer oder Kneter unter Anlegen von Vakuum zugemischt.
Dann werden die daraus resultierenden Komponenten A und B über eine 2-Komponenten-Mischanlage zusammengemischt und sogleich auf einer üblichen Streichanlage auf einem Trennpapier zu einem pastösen Film beliebiger Dicke, vorzugsweise 0,2 mm bis 2,0 mm, ausgestrichen.
Im anschließenden Wärmekanaldurchlauf erfolgt bei einer Temperatur, die deutlich unterhalb der Anspringtemperatur der Vulkanisation liegen muß und ansonsten im wesentlichen abhängig von der Art und der Menge des Veresterungskatalysators und der Durchlaufgeschwindigkeit ist, die Aushärtung der pastösen Mischung zur haftklebrigen Folie. Üblicherweise liegt die Temperatur bei einer Durchlaufgeschwindigkeit von 1 m/min bis 10 m/min zwischen Raumtemperatur und 80 °C.

### Beispiele

In der Tabelle 1 sind die zur Herstellung der Folie verwendeten Materialien aufgeführt, und zwar jeweils mit Handelsnamen und Hersteller. Die genannten Chemikalien sind alle frei im Handel erhältlich. Die Ausgangsstoffe werden je nach Anwendungszweck der Folie in unterschiedlichen Mischungsverhältnissen eingesetzt.

**Tabelle 1:**

| Zur Herstellung der Folie eingesetzte Materialien mit Handelsnamen und Hersteller | | |
|---|---|---|
| Handelsname | Chemische Basis | Hersteller / Lieferant |
| Poly bd R 45 HT | Hydroxyl-funktionalisiertes Polybutadien | Elf Atochem |
| Polyvest C 70 | Maleinsäureanhydrid-funktionalisiertes Polybutadien | Hüls |
| Glycerin | Glycerin | Merck |
| Ethylenglykol | Ethylenglykol | Merck |
| Bitumen B 65 | Bitumen | Elf Bitumen Deutschland |
| Schenectady SP 553 | Terpen-Phenolharz | Schenectady |
| Gravex 942 | Naphthenisches Öl | Shell |
| Palatinol N | Diisononylphthalat | BASF |
| Crystex N | Schwefel | Kali-Chemie |
| Perkacit MBTS | 2,2' Dibenzothiazyldisulfid | Akzo Nobel |
| Weißfeinkalk | Calciumoxid | RWK |
| Talkum Prever | Talkum | Luzenac |
| Printex 30 | Ruß | Degussa |
| 1,4-Diazabicyclo[2.2.2.]octan (DABCO) | | Merck |
| N,N,N',N'- Tetramethylethylendiamin (TMEDA) | | Merck |

Im folgenden werden die Rezepturen für die Herstellung von erfindungsgemäßen Folien jeweils in Form einer Tabelle dargestellt. Die Aufbereitung der verwendeten Materialien erfolgte dabei stets auf dem nachstehend beschriebenen Weg.

### Beispiel 1

| | |
|---|---|
| Poly bd R 45 HT | 26,0 kg |
| Polyvest C 70 | 17,1 kg |
| Bitumen B 65 | 15,0 kg |
| Crystex N | 16,0 kg |
| Perkacit MBTS | 1,5 kg |
| Weißfeinkalk | 3,0 kg |
| Talkum Prever | 15,0 kg |
| Printex 30 | 6,1 kg |
| DABCO | 0,3 kg |

### Beispiel 2

| | |
|---|---|
| Poly bd R 45 HT | 28,0 kg |
| Polyvest C 70 | 15,1 kg |
| Bitumen B 65 | 15,0 kg |
| Crystex N | 16,0 kg |
| Perkacit MBTS | 1,5 kg |
| Weißfeinkalk | 3,0 kg |
| Talkum Prever | 15,0 kg |
| Printex 30 | 6,1 kg |
| DABCO | 0,3 kg |

### Beispiel 3

| | |
|---|---|
| Poly bd R 45 HT | 26,0 kg |
| Polyvest C 70 | 17,1 kg |
| Bitumen B 65 | 10,0 kg |
| Schenectady SP 553 | 5,0 kg |
| Crystex N | 16,0 kg |
| Perkacit MBTS | 1,5 kg |
| Weißfeinkalk | 3,0 kg |
| Talkum Prever | 15,0 kg |
| Printex 30 | 6,1 kg |
| DABCO | 0,3 kg |

### Beispiel 4

| | |
|---|---|
| Poly bd R 45 HT | 26,0 kg |
| Polyvest C 70 | 17,1 kg |
| Bitumen B 65 | 10,0 kg |
| Gravex 942 | 5,0 kg |
| Crystex N | 16,0 kg |
| Perkacit MBTS | 1,5 kg |
| Weißfeinkalk | 3,0 kg |
| Talkum Prever | 15,0 kg |
| Printex 30 | 6,1 kg |
| DABCO | 0,3 kg |

### Beispiel 5

| | |
|---|---|
| Poly bd R 45 HT | 26,0 kg |
| Polyvest C 70 | 17,1 kg |
| Bitumen B 65 | 10,0 kg |
| Palatinol N | 5,0 kg |
| Crystex N | 16,0 kg |
| Perkacit MBTS | 1,5 kg |
| Weißfeinkalk | 3,0 kg |
| Talkum Prever | 15,0 kg |
| Printex 30 | 6,1 kg |
| DABCO | 0,3 kg |

### Beispiel 6

| | |
|---|---|
| Poly bd R 45 HT | 27,0 kg |
| Polyvest C 70 | 17,0 kg |
| Glycerin | 0,1 kg |
| Bitumen B 65 | 15,0 kg |
| Crystex N | 16,0 kg |
| Perkacit MBTS | 1,5 kg |
| Weißfeinkalk | 3,0 kg |
| Talkum Prever | 15,0 kg |
| Printex 30 | 5,1 kg |
| DABCO | 0,3 kg |

### Beispiel 7

| | |
|---|---|
| Poly bd R 45 HT | 27,0 kg |
| Polyvest C 70 | 17,0 kg |
| Ethylenglykol | 0,1 kg |
| Bitumen B 65 | 15,0 kg |
| Crystex N | 16,0 kg |
| Perkacit MBTS | 1,5 kg |
| Weißfeinkalk | 3,0 kg |
| Talkum Prever | 15,0 kg |
| Printex 30 | 5,1 kg |
| DABCO | 0,3 kg |

### Beispiel 8

| | |
|---|---|
| Poly bd R 45 HT | 27,5 kg |
| Polyvest C 70 | 18,7 kg |
| Bitumen B 65 | 15,0 kg |
| Crystex N | 13,0 kg |
| Perkacit MBTS | 1,5 kg |
| Weißfeinkalk | 3,0 kg |
| Talkum Prever | 15,0 kg |
| Printex 30 | 6,0 kg |
| DABCO | 0,3 kg |

### Beispiel 9

| | |
|---|---|
| Poly bd R 45 HT | 33,5 kg |
| Polyvest C 70 | 22,8 kg |
| Bitumen B 65 | 15,0 kg |
| Crystex N | 4,0 kg |
| Perkacit MBTS | 0,4 kg |
| Weißfeinkalk | 3,0 kg |
| Talkum Prever | 15,0 kg |
| Printex 30 | 6,0 kg |
| DABCO | 0,3 kg |

### Beispiel 10

| | |
|---|---|
| Poly bd R 45 HT | 26,0 kg |
| Polyvest C 70 | 17,1 kg |
| Bitumen B 65 | 15,0 kg |
| Crystex N | 16,0 kg |
| Perkacit MBTS | 1,5 kg |
| Weißfeinkalk | 3,0 kg |
| Talkum Prever | 15,0 kg |
| Printex 30 | 6,1 kg |
| TMEDA | 0,3 kg |

Die Herstellung der A-Komponente in den genannten Beispielen erfolgte jeweils in der Weise, daß die aufgeführten Rohstoffe mit Ausnahme des Polyvest C70 in einem Planetenmischer oder Dissolver zwei Stunden miteinander gemischt wurden. Um ein blasenfreies Produkt zu erhalten, wurde die Mischung während der letzten 10 Minuten des Mischvorganges durch Anlegen eines Unterdrucks von kleiner 0,02 bar (15 Torr) entgast. Man erhielt jeweils eine bei Raumtemperatur weiterverarbeitbare Paste im Viskositätsbereich von 50 Pa*s bis 5000 Pa*s.

Die B-Komponente war in den genannten Beispielen jeweils das Polyvest C70.

A- und B-Komponente wurden über eine 2-Komponenten-Mischanlage zusammengemischt und sogleich auf einer üblichen Streichanlage auf einem beidseitigen Trennpapier zu einem pastösen Film von 1,0 mm Dicke ausgestrichen. Im anschließenden Wärmekanaldurchlauf erfolgte bei 70 °C die Vernetzung zur haftklebrigen Folie.

Die ermittelten klebtechnischen Eigenschaften der so erhaltenen Folien sind in Tabelle 2 zusammengestellt.

Für die Prüfungen wurden dazu feuerverzinkte, elektrolytisch verzinkte und galvannealed Bleche sowie normaler Stahl herangezogen. Das Öl (Anticorit RP 4107 S) wurde in einer Stärke von 2 bis 3 g/m² aufgetragen.

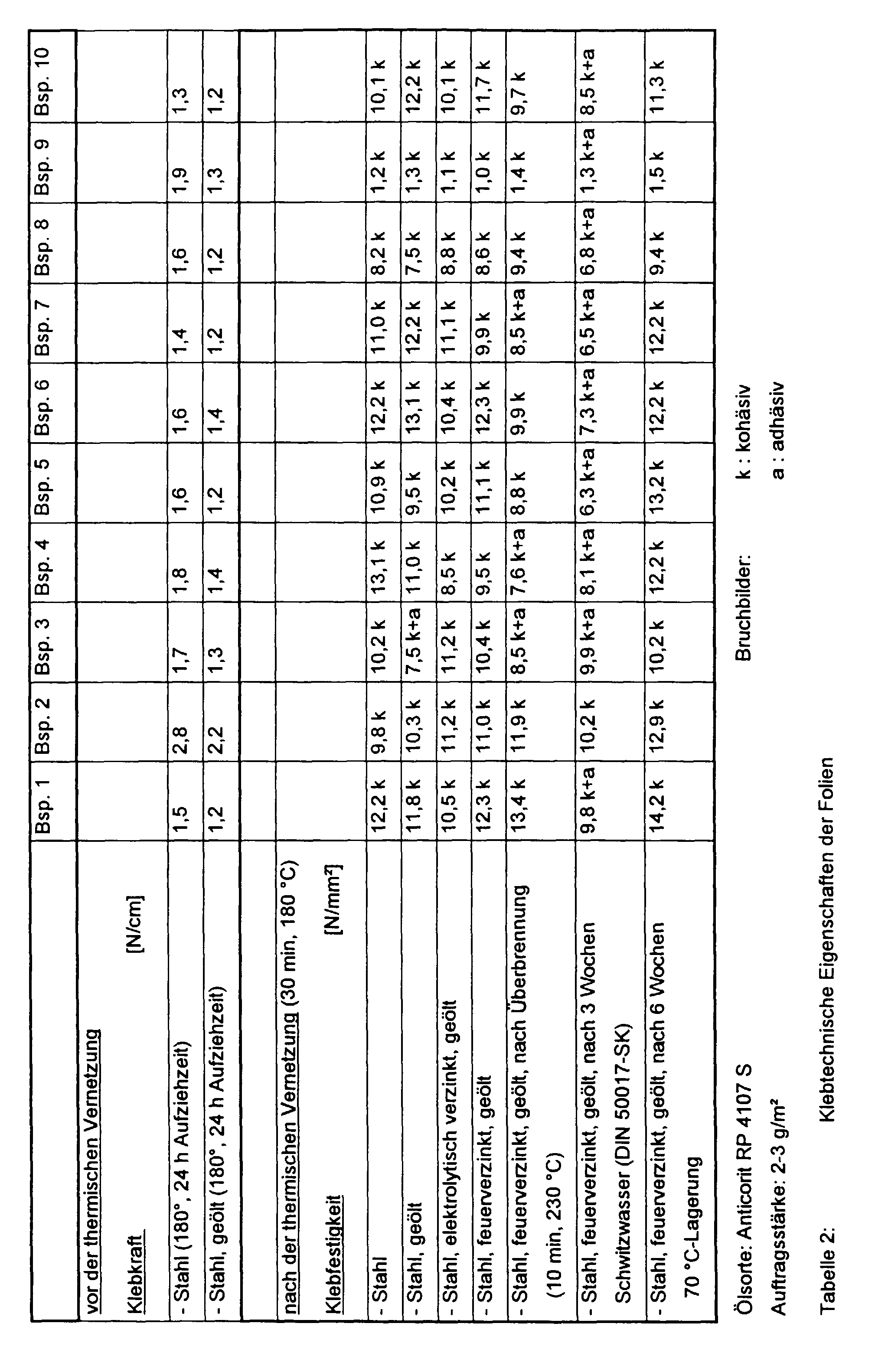

## Patentansprüche

1. Beidseitig haftklebrige Folie, die sich aus folgenden Anteilen zusammensetzt, zu
15 - 60 Gew.-% aus einem thermisch vulkanisierbaren, polyveresterten Kautschuk,
10 - 30 Gew.-% aus Bitumen und/oder klebrigmachenden Harzen,
1 - 20 Gew.-% aus Vulkanisationshilfsmitteln,
0,2 - 5 Gew.-% aus Vulkanisationsbeschleunigern,
10 - 70 Gew.-% aus Füllstoffen und
gegebenenfalls weiteren Hilfsstoffen, Weichmachern und Ölen.

2. Folie nach Anspruch 1, dadurch gekennzeichnet, daß
der Kautschuk das Reaktionsprodukt eines Polymeren oder eines Polymergemisches A mit im Mittel mindestens zwei Hydroxylgruppen pro Makromolekül und eines mit A verträglichen Polymeren oder Polymergemisches B mit im Mittel mindestens zwei Carbonsäuregrupenn oder mindestens zwei Carbonsäureanhydridgruppen oder mindestens einer Carbonsäuregruppe sowie einer Carbonsäureanhydridgruppe pro Makromolekül, wobei mindestens eines der Polymeren A oder B olefinische Doppelbindungen enthält, ist.

3. Folie nach Anspruch 2, dadurch gekennzeichnet, daß
die Polymere A und B flüssige Polybutadiene sind, die im Mittel mindestens zwei Hydroxylgruppen, Carbonsäuregruppen oder Carbonsäureanhydridgruppen pro Makromolekül tragen.

4. Folie nach den Ansprüchen 1 bis 3, dadurch gekennzeichnet, daß
der Kautschuk als weitere Ausgangsbestandteile kurzkettige Hydroxyl- oder Carbonsäureanhydrid- oder Carbonsäure-terminierte Stoffe aufweist.

5. Folie nach den Ansprüchen 1 bis 4, dadurch gekennzeichnet, daß
die Polyveresterung des Kautschuks durch den Zusatz von 0,05 - 0,5 Gew.-% eines Veresterungskatalysators erfolgt.

6. Folie nach den Ansprüchen 1 bis 5, dadurch gekennzeichnet, daß
als Veresterungskatalysatoren basische Veresterungskatalysatoren wie Amine, bevorzugt sekundäre und tertiäre aliphatische Amine, ganz besonders bevorzugt n-Dibutylamin, Dimethycyclohexylamin, Diazabicyclooctan, Tetramethylethylendiamin oder Pentamethyldiethylentriamin sowie 1-Methylimidazol oder 1,2-Dimethylimidazol, eingesetzt sind.

7. Folie nach den Ansprüchen 1 bis 6, dadurch gekennzeichnet, daß
als Vulkanisationshilfsmittel und Vulkanisationsbeschleuniger Schwefel, 2,2'-Dibenzothiazyldisulfid und gegebenenfalls Zinkoxid zugesetzt sind.

8. Folie nach den Ansprüchen 1 bis 7, dadurch gekennzeichnet, daß
als Füllstoffe Kreide, Ruß, Titandioxid, Talkum, pyrogene Kieselsäure, Bariumsulfat oder Calciumoxid zugesetzt sind.

9. Folie nach den Ansprüchen 1 bis 8, dadurch gekennzeichnet, daß
als Hilfsstoffe Oxidationsinhibitoren, bevorzugt Pentaerythrityl-tetrakis-[3-(3,5-di-tert.butyl-4-hydroxiphenyl)-propionat], zugesetzt sind.

10. Verwendung einer Folie nach mindestens einem der vorangehenden Ansprüche im Automobilrohbau, insbesondere zur Verklebung von geölten Blechen.

## Claims

1. Double-sided pressure-sensitive adhesive film built up from the following components :
15-60% by weight of a thermally vulcanizable, polyesterified rubber,
10-30% by weight of bitumen and/or tackifying resins,
1-20% by weight of vulcanization auxiliaries,
0.2-5% by weight of vulcanization accelerators,
10-70% by weight of fillers, and,
if desired, further auxiliaries, plasticizers and oils.

2. Film according to Claim 1, characterized in that the rubber is the reaction product of a polymer or of a polymer mixture A having on average at least two hydroxyl groups per macromolecule and of a polymer or polymer mixture B which is compatible with A and has on average at least two carboxylic acid groups or at least two carboxylic anhydride groups or at least one carboxylic acid group and one carboxylic anhydride group per macromolecule, at least one of these polymers, A or B, comprising olefinic double bonds.

3. Film according to Claim 2, characterized in that the polymers A and B are liquid polybutadienes which carry on average at least two hyroxyl groups, carboxylic acid groups or carboxylic anhydride groups per macromolecule.

4. Film according to Claims 1 to 3, characterized in that the rubber comprises, as further starting constituents, short-chain hydroxyl- or carboxylic anhydride- or carboxyl-terminated substances.

5. Film according to Claims 1 to 4, characterized in that the rubber is polyesterified by adding 0.05-0.5% by weight of an esterification catalyst.

6. Film according to Claims 1 to 5, characterized in that esterification catalysts employed are basic esterification catalysts such as amines, preferably secondary and tertiary aliphatic amines and, with very particular preference, n-dibutylamine, dimethylcyclohexylamine, diazabicyclooctane, tetramethylethylenediamine or pentamethyldiethylenetriamine and also 1-methylimidazole or 1,2-dimethylimidazole.

7. Film according to Claims 1 to 6, characterized in that vulcanizing auxiliaries and vulcanization accelerators added are sulphur, 2,2'-dibenzothiazolyl disulphide and, if desired, zinc oxide.

8. Film according to Claims 1 to 7, characterized in that fillers added are chalk, carbon black, titanium dioxide, talc, pyrogenic silica, barium sulphate or calcium oxide.

9. Film according to Claims 1 to 8, characterized in that auxiliaries added are antioxidants, preferably pentaerythrityl tetrakis-[3-(3,5-di-tert-butyl-4-hydroxyphenyl)propionate].

10. Use of a film according to at least one of the preceding claims in automotive body-shell construction, especially for bonding oiled metal panels.

## Revendications

1. Film autoadhésif des deux côtés qui se compose des proportions suivantes, de
| | |
|---|---|
| 15-60% en poids | d'un caoutchouc thermiquement vulcanisable polyestérifié; |
| 10-30% en poids | de bitume et/ou de résines rendant adhésif; |
| 1-20% en poids | d'auxiliaires de vulcanisation; |
| 0,2-5% en poids | d'accélérateurs de vulcanisation; |
| 10-70% en poids | de charges, et |
le cas échéant, d'autres auxiliaires, plastifiants et huiles.

2. Film suivant la revendication 1, caractérisé en ce que le caoutchouc est le produit réactionnel d'un polymère ou d'un mélange de polymères A avec en moyenne au moins deux groupements hydroxyle par macromolécule et d'un polymère ou d'un mélange de polymères B compatibles avec A avec, en moyenne, au moins deux groupements acide carboxylique ou au moins deux groupements anhydride d'acide carboxylique ou au moins un groupement acide carboxylique ainsi qu'un groupement anhydride d'acide carboxylique par macromolécule, au moins un des polymères A ou B contenant des doubles liaisons oléfiniques.

3. Film suivant la revendication 2, caractérisé en ce que les polymères A et B sont des polybutadiènes liquides qui portent en moyenne au moins deux groupements hydroxyle, des groupements acide carboxylique ou des groupements anhydride d'acide carboxylique par macromolécule.

4. Film suivant les revendications 1 à 3, caractérisé en ce que le caoutchouc présente, comme autres parties constitutives de départ, des matières à chaîne courte à terminaison hydroxyle ou anhydride d'acide carboxylique ou acide carboxylique.

5. Film suivant les revendications 1 à 4, caractérisée en ce que la polyestérification du caoutchouc s'effectue par l'addition de 0,05-0,5% en poids d'un catalyseur d'estérification.

6. Film suivant les revendications 1 à 5, caractérisé en ce qu'on utilise comme catalyseurs d'estérification des catalyseurs d'estérification basiques comme des amines, de préférence des amines aliphatiques secondaires et tertiaires, tout particulièrement la n-dibutylamine, la diméthylcyclohexylamine, le diazabicyclooctane, la tétraméthyléthylènediamine ou la pentaméthyldiéthylènetriamine, ainsi que le 1-méthylimidazole ou le 1,2-diméthylimidazole.

7. Film suivant les revendications 1 à 6, caractérisé en ce qu'on ajoute comme auxiliaires de vulcanisation et accélérateurs de vulcanisation du soufre, du disulfure de 2,2'-dibenzothiazyl et, le cas échéant, de l'oxyde de zinc.

8. Film suivant les revendications 1 à 7, caractérisé en ce qu'on ajoute comme charges de la craie, du noir de carbone, du dioxyde de titane, du talc, de la silice pyrogène, du sulfate de baryum ou de l'oxyde de calcium.

9. Film suivant les revendications 1 à 8, caractérisé en ce qu'on ajoute comme auxiliaires des inhibiteurs d'oxydation, de préférence du pentaérythrityltétrakis[3-(3,5-di(t-butyl)-4-hydroxy-phényl)propionate].

10. Utilisation d'un film suivant au moins l'une des revendications précédentes dans la construction de coques d'automobiles, en particulier pour le collage de tôles huilées.
